# EUROPEAN PATENT APPLICATION

(11) **EP 1 153 825 A2**
(43) Date of publication of application: **14.11.2001**
(21) Application number: 01109185.7
(22) Date of filing: 12.04.2001
(51) Int. Cl.: B62D 53/02

(54) **Articulated vehicle**

(30) Priority: 13.05.2000 GB 0011474
(71) Applicant: J.C. BAMFORD EXCAVATORS LIMITED, Uttoxeter Staffordshire ST14 5JP (GB)
(72) Inventor: Ratcliffe, Simon John, Staffordshire, ST14 5HP (GB); Selby, Christopher John, Staffordshire, ST11 9AU (GB)
(74) Representative: Lucking, David John

(57) **Abstract**

An articulated vehicle (10) including a front (11) and a rear (12) part, and a coupling member (16) which connects the front part (11) to the rear part (12), and is adapted to permit articulation of the front part (11) with respect to the rear part (12) about a generally vertical axis (A) whilst also permitting movement of the rear part (12) with respect to the front part (11) about a generally horizontal axis (B), characterised in that the coupling member (16) includes a body (30) made as a unitary casting.

## Description

This invention relates to an articulated vehicle, more particularly, to a vehicle, such as a dump truck, having front and rear parts which are coupled together to permit of articulation about generally vertically and generally horizontal axes.

It is known to provide an articulated vehicle, such as a dump truck, with a coupling member, by means of which the front part of the vehicle is connected to the rear part. Typically, the coupling member includes a body which is made in two parts, which are fastened together by a plurality of bolts, or by welding, for examples.

UK patent application GB2333748 discloses a coupling member having a body in which two parts are bolted together. Making the body in two parts permits the two parts to be made from two different materials and facilitates handling of the two parts, but providing an adequately strong connection between the two can be expensive.

According to a first aspect of the invention we provide an articulated vehicle including a front and a rear part, and a coupling member which connects the front part to the rear part, and is adapted to permit of articulation of the front part with respect to the rear part about a generally vertical axis whilst also permitting movement of the rear part with respect to the front part about a generally horizontal axis, characterised in that the coupling member includes a body made as a unitary casting.

Thus in manufacturing the coupling member, the step of welding or bolting together the two parts of the coupling body is avoided, and, notwithstanding handling of the unitary casting, for example for finishing machining, may be more difficult, the cost of manufacturing the coupling member may be reduced.

It is necessary to select appropriate materials for casting the body to achieve the necessary strength etc. For example the body may be cast in cast, iron, ductile iron, austempered ductile iron, or a suitable steel.

The coupling body may be cast using a disposable mould casting method such as sand casting or investment casting. Preferably the casting method is selected to produce a component which requires minimum machining to achieve the required tolerance and surface finish.

The coupling body may include a first connecting means including at least one articulation bearing part, each articulation bearing part being pivotally connected to the front or rear part of the vehicle to permit of articulation of the front or rear part of the vehicle with respect to the coupling body about the generally vertical axis. The first connecting means may include two articulation bearing parts, the two articulation bearing parts being provided at two opposite sides of the first connecting means, and positioned on the generally vertical axis.

The coupling body may also include a second connecting means, the second connecting means being generally cylindrical and engaged with a corresponding cylindrical support member of the rear or front support part of the vehicle, the support member being rigidly connected to the rear or front part of the vehicle and being adapted to permit of movement of the rear or front part with respect to the coupling body about a generally horizontal axis.

The front part of the vehicle may include an engine and a driver's cab, the engine being positioned towards the front of the front part and the driver's cab towards the rear of the front part. The rear part of the vehicle may include a load carrying space. The load carrying space may be provided within an open topped container which is pivotally connected to a frame of the rear section, in order to facilitate tipping of material out of the container.

A drive shaft may be provided to transmit power from the engine to at least one pair of rear wheels provided on the rear part of the vehicle via a transmission means, and the drive shaft may extend through the coupling member along the generally horizontal axis.

According to a second aspect of the invention, we provide a coupling member adapted to connect a front part of an articulated vehicle to a rear part of an articulated vehicle and to permit of articulation of the front part of the vehicle with respect to the rear part about a generally vertical axis and movement of the rear part of the vehicle with respect to the front part about a generally horizontal axis, characterised in that the coupling member includes a body made as a unitary casting.

According to a third aspect of the invention, we provide a method of manufacturing a coupling member according to the second aspect of the invention, characterised in that the method includes the step of casting a body of the coupling member in one piece.

The method may also include the step of machining a first connecting means of the coupling member to produce at least one articulation bearing part by means of which the first connecting means may be pivotally connected to the front or rear part of the vehicle.

The invention will now be described with reference to the accompanying drawings, of which

FIGURE 1 is an illustration of a side view of an articulated vehicle according to the inventions.

FIGURE 2 is an illustration of a longitudinal section through a coupling member of the articulated vehicle of Figure 1.

FIGURE 3 is an end view on the arrow C of Figure 2.

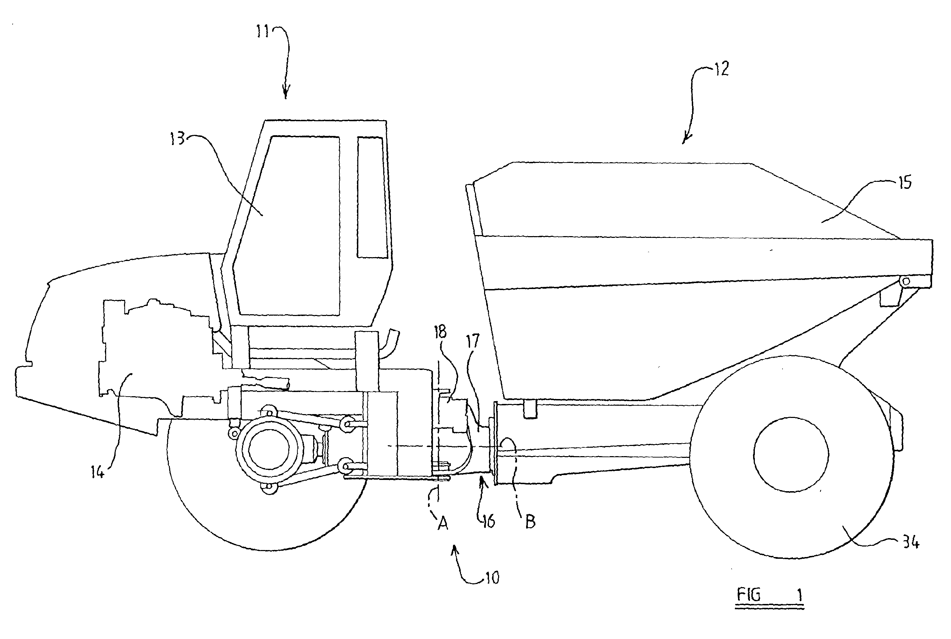

Referring now to Figure 1, there is shown an articulated vehicle 10, specifically a dump truck, which includes a front part 11 and a rear part 12. The front pail 11 includes a driver's cab 13 and an engine 14, the engine 14 being located towards the front of the front part 11 and the driver's cab 13 being located towards the rear of the front part 11. The rear section includes a load carrying space 15, which is provided within an open topped container. The container 15 is pivotally connected to the remainder of the rear part 12 to facilitate tipping of material out of the container.

The front 11 and rear 12 pails of the vehicle 10 are connected together by means of a coupling member 16, which is adapted to permit of articulation of the front part 11 with respect to the rear part 12 about a generally vertical axis A, whilst also permitting movement of the rear part 12 with respect to the front part 11 about a generally horizontal axis B.

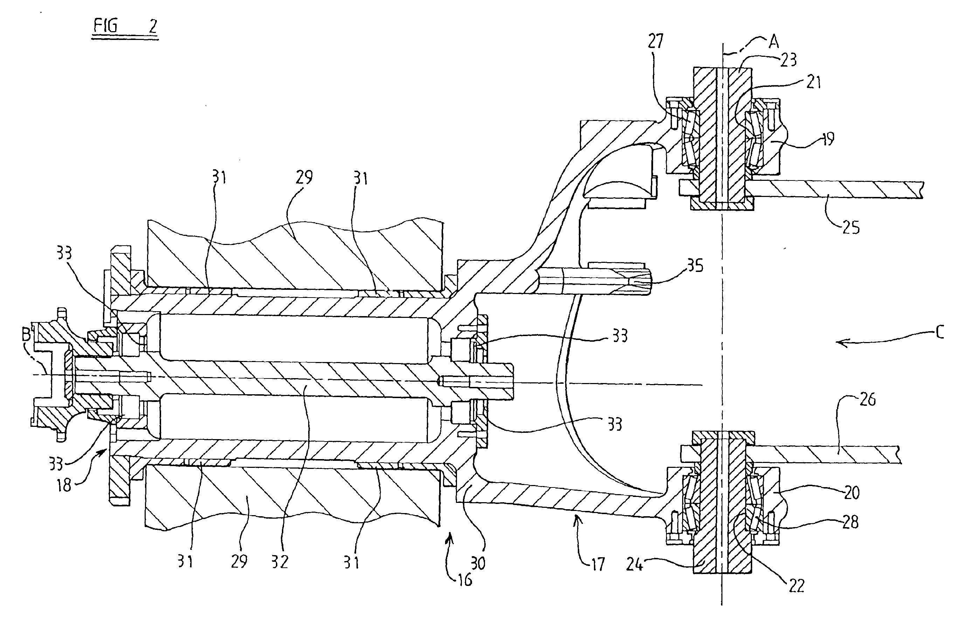

Referring also to Figure 2, the coupling member 16 has a body 30 which is made as a single unitary cast component. The body 30 is cast using a disposable mould casting method such as sand or investment casting, and is made from a material chosen to achieve the necessary strength and stiffness etc, such as cast iron, ductile iron, austempered ductile iron or a suitable steel.

The body 30 includes a first connecting means 17 which in this example is adapted to be connected to the front part 11 of the vehicle 10, and a second connecting means 18 which is adapted to be connected to the rear part 12 of the vehicle 10.

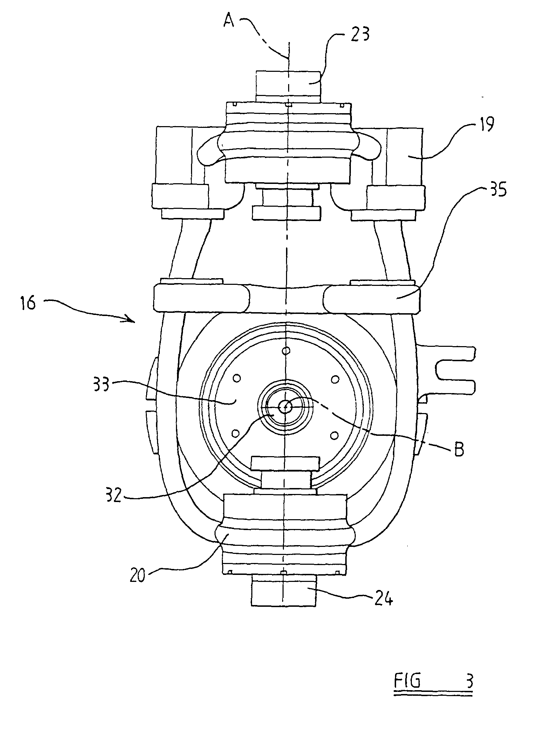

The first connecting means 17 includes a pair of spaced apart articulation bearing parts 19, 20, as shown in Figures 2 and 3, each of which includes an aperture 21, 22 centred along the generally vertical axis A. The apertures 21, 22 may be machined from the body 30 of the coupling member 16, or they may be provided within the coupling member 16 as cast. Alternatively, apertures 21, 22 provided in the coupling member 16 as cast, may also be machined to alter the dimensions of or to finish the apertures 21, 22.

Each aperture 21, 22 receives a pivot pin 23, 24 about which the bearing parts 19, 20 may rotate, the pivot pins 23, 24 being connected to the front part 11 of the vehicle 10, by means of articulation support members 25, 26. Each articulation support member 25, 26 extends from the front part 11 of the vehicle 10, and includes an aperture in which the respective pivot pin 23, 24 is received. Thus the coupling member 16 is pivotally connected to the front part 11 of the vehicle 10, to permit of rotation of the coupling member 16, and hence the rear part 12 of the vehicle 10, with respect to the front part 11 of the vehicle 10 about the generally vertical axis A.

Each articulation bearing part 19, 20 is provided with an articulation bearing insert 27, 28 which provides a suitable surface for movement of the pivot pin 23 relative to the aperture 21, 22. Each articulation bearing insert 27, 28 is bolted on to the articulation bearing part 19, 20, within the aperture 21, 22.

The second connecting means 18 of the coupling member 16, is generally cylindrical, with a longitudinal axis coincident with the generally horizontal axis B of the rear part 12 of the vehicle 10, and is connected to the rear part 12 via an oscillation support member 29 provided on the rear part 12. The oscillation support member 29 is cylindrical, and receives the second connecting means 18 of the coupling member 16, supporting the coupling member 16 whilst permitting the coupling member 16 to rotate with respect to the oscillation support member 25 about the generally horizontal axis B.

Oscillation bearings 31 are provided on the second connecting means 18, to provide a suitable surface for rotation of the second connecting means 18 with respect to the oscillation support member 29. The oscillation bearings 31 may be attached to the second connecting means 18 as desired.

A drive shaft 32 extends through the coupling member 16, along the generally horizontal axis B, and is supported by drive shaft bearings 33 provided within the second connecting means 18 of the coupling member 16. The drive shaft bearings 33 permit of rotation of the drive shaft 32 about the axis B, in order to transmit power from the engine 14 to a pair of rear wheels 34 provided on the rear part 12 of the vehicle 10, via a suitable transmission means (not shown).

A steering control support member 35 is incorporated into the first connecting means 17, to provide support for an actuator (not shown), by means of which articulation of the vehicle 10 is controlled.

Various modifications may be made to the configuration of the coupling member 16 without departing from the scope of the invention.

For example, the first connecting means 17 of the coupling member 16 need not be connected to the front part 11 of the vehicle 10, nor the second connecting means 18 be connected to the rear part 12, but the first connecting means 17 may be connected to the rear part 12 of the vehicle 10 to permit articulation of the coupling member 16 with respect to the rear part 12 of the vehicle about a generally vertical axis, and the second connecting means 18 may be connected to the front part 11 of the vehicle 10 to permit oscillation of the coupling member 16 with respect to the front part 11 about a generally horizontal axis.

The first connecting means 17 may have any configuration in which two spaced apart articulation bearing parts 19, 20 may be provided. For examples, the first connecting means 17 may have a hollow circular, rectangular or ovoidal cross-section, with two apertures 21, 22 being provided in mutually opposite sides.

The first connecting means 17 need not include two articulation bearing parts, but may include only one or more than two articulation bearing parts.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An articulated vehicle (10) including a front (11) and a rear part (12), and a coupling member (16) which connects the front part (11) to the rear part (12), and is adapted to permit articulation of the front part (11) with respect to the rear part (12) about a generally vertical axis (A) whilst also permitting movement of the rear part (12) with respect to the front part (11) about a generally horizontal axis (B), **characterised in that** the coupling member (16) includes a body (30) which is made as a unitary casting.

2. An articulated vehicle (10) as claimed in claim 1 **characterised in that** the coupling body (30) includes a first connecting means (17), the first connecting means (17) including at least one articulation bearing pail (19, 20), each articulation bearing part (19, 20) being pivotally connected to the front (11) or rear part (12) of the vehicle (10) to permit of rotation of the front (11) or rear part (12) of the vehicle (10) with respect to the coupling body (30) about the generally vertical axis (A).

3. An articulated vehicle (10) as claimed in claim 2 **characterised in that** the first connecting means (17) includes two articulation bearing parts (19, 20), the two articulation bearing parts (19, 20) being provided at two opposite sides of the first connecting means (17), and positioned on the generally vertical axis (A).

4. An articulated vehicle (10) as claimed in any preceding claim **characterised in that** the coupling body (30) is cast from austempered ductile iron.

5. An articulated vehicle (10) as claimed in any preceding claim **characterised in that** the coupling body (30) is cast using a disposable mould casting method.

6. An articulated vehicle (10) as claimed in any preceding claim **characterised in that** the coupling body (30) includes a second connecting means (18), the second connecting means (18) being generally cylindrical and engaged with a corresponding cylindrical support member (29) of the rear (12) or front part (11) of the vehicle (10), the support member (29) being rigidly connected to the rear (12) or front part (11) of the vehicle (10) and adapted to permit of movement of the rear (12) or front part (11) with respect to the coupling body (30) about a generally horizontal axis (B).

7. An articulated vehicle (10) as claimed in any preceding claim **characterised in that** the front part (11) of the vehicle (10) includes an engine (14) and a driver's cab (13), the engine (14) being positioned towards the front of the front part (11) and the driver's cab (13) towards the rear of the front part (11).

8. An articulated vehicle (10) as claimed in any preceding claim **characterised in that** the rear part (12) of the vehicle (10) includes a load carrying space (15).

9. An articulated vehicle (10) as claimed in claim 8 **characterised in that** the load carrying space (15) is provided within an open topped container which is pivotally connected to a frame of the rear section (12), in order to facilitate tipping of material out of the container.

10. An articulated vehicle (10) as claimed in claim 7, **characterised in that** the vehicle (10) is provided with a drive shaft (32), the drive shaft (32) being adapted to transmit power from the engine (14) to at least one pair of wheels (34) provided on the rear part (12) of the vehicle (10) via a transmission means, and extending through the coupling member (16) along the generally horizontal axis (B).

11. A coupling member (16) adapted to connect a front part (11) of an articulated vehicle (10) to a rear part (12) of an articulated vehicle (10) and to permit of articulation of the front part (11) of the vehicle (10) with respect to the rear part (12) about a generally vertical axis (A) and movement of the rear part (12) of the vehicle (10) with respect to the front part (11) about a generally horizontal axis (B), **characterised in that** the coupling member (16) includes a body (30) made as a unitary casting.

12. A method of manufacturing a coupling member (16) according to claim 11, **characterised in that** the method includes the step of casting a body (30) of the coupling member (16) in one piece.

13. A method of manufacturing coupling member (16) as claimed in claim 12 **characterised in that** the method includes the step of machining a first connecting means (17) of the coupling member (16) to produce at least one articulation bearing part (19, 20) by means of which the first connecting means (17) may be pivotally connected to the front (11) or rear part (12) of the vehicle (10).
